# Europäisches Patentamt

# European Patent Office

# Office européen des brevets

(19)

(11) Veröffentlichungsnummer: **0 124 895**
**B1**

(12) **EUROPÄISCHE PATENTSCHRIFT**

(45) Veröffentlichungstag der Patentschrift:
18.03.87

(21) Anmeldenummer: **84105060.2**

(22) Anmeldetag: **04.05.84**

(51) Int. Cl.⁴: **H 02 G 15/08**, H 01 R 17/12,
H 01 R 9/05

(54) **Vorrichtung zum Verbinden von koaxialen Breitbandkabeln.**

(30) Priorität: **09.05.83 DE 3316897**

(43) Veröffentlichungstag der Anmeldung:
**14.11.84 Patentblatt 84/46**

(45) Bekanntmachung des Hinweises auf die Patenterteilung:
**18.03.87 Patentblatt 87/12**

(84) Benannte Vertragsstaaten:
**AT BE DE FR GB IT**

(56) Entgegenhaltungen:
**EP-A-0 051 109**
**DE-A-3 124 374**
**US-A-3 983 457**

(73) Patentinhaber: **Siemens Aktiengesellschaft Berlin und München, Wittelsbacherplatz 2, D-8000 München 2 (DE)**

(72) Erfinder: **Rein, Helmuth, Dipl.- Ing., Noestrasse 18, D-8000 München 71 (DE)**

## Beschreibung

Die Erfindung betrifft eine Vorrichtung mit Steckanschlüssen zum Verbinden von koaxialen Breitbandkabeln mit einer im Bereich der Vorrichtung aufgeschrumpften Kabelmuffe, wobei die Kabelmuffe den Steckanschlüssen der Vorrichtung entsprechende, aufschrumpfbare Kabeleingänge aufweist, die fingerförmig von der Kabelmuffe abstehend gestaltet sind und wobei mindestens ein Teil der Kabeleingänge an ihren abstehenden Enden als geschlossene, abtrennbare Abschlußkappen ausgebildet sind.

In der DE-A-30 40 864 wird eine Vorrichtung zum Verbinden und Umhüllen von Kabelverbindungen, insbesondere von Kabeln für Breitbandkommunikation (BK-Kabel) beschrieben. Dort handelt es sich um Formteile, die über einem Elektronicverbinder zusammengesteckt werden, wobei diese Formteile entsprechende Kabeleingänge aufweisen. Zumindest die Kabeleingänge sind aus schrumpfbarem Material und werden nach Einführung der Koaxialkabel auf die Kabelmäntel dichtend aufgeschrumpft. Bei der Zusammenführung von BK-Kabeln besteht jedoch das Problem, daß vorgesehene, jedoch nicht benutzte Abzweigungen mit einem angepaßten elektrischen Abschlußwiderstand abgeschlossen werden müssen. Für von vornherein unbelegte Kabeleinführungen wird daher ein Kabelstück als Abschlußadapter angeboten. Hier ergeben sich dann Schwierigkeiten bei der Entfernung dieses Kabelstückes und mit dem anschließenden Einsatz des eigentlichen Kabels, da der Kabeleingang bereits für den vorher eingesetzten Abschlußwiderstand abgedichtet werden mußte.

Aus der DE-A-31 24 374 ist eine Kabelmuffe aus einem Metallgehäuse und einer Umhüllung aus schrumpfbarem Material bekannt, bei der diese Umhüllung mehrere Kabeleinführungsstutzen aufweist, die fingerförmig von der Kabelmuffe abstehend gestaltet sind. Außerdem sind mindestens einige der Kabeleinführungsstutzen an ihren Enden als geschlossene, abtrennbare Abschlußkappen ausgebildet.

So ergibt sich nun für vorliegende Erfindung die Aufgabe, eine Vorrichtung mit Steckanschlüssen zum Verbinden von BK-Kabeln zu schaffen, bei der die Probleme für das Beschalten der nicht belegten Steckanschlüsse mit Abschlußwiderständen sowie für das nachträgliche Einführen von BK-Kabeln wesentlich vereinfacht werden.

Die gestellte Aufgabe wird mit Hilfe einer Vorrichtung der eingangs geschilderten Art dadurch gelöst, daß an den Steckanschlüssen der Kabeleingänge jeweils ein elektrisch angepaßter, abschaltbarer Abschlußwiderstand angeordnet ist, daß eine Abschaltvorrichtung für jeden Abschlußwiderstand angeordnet ist und daß eine durch die Einführung eines Kabels wirksam werdende Rasteinrichtung für das jeweils eingeführte Kabel angeordnet ist.

Dieses anhängende Problem wird nun also gemäß der Erfindung vorteilhaft durch die Kombination der im Patentanspruch 1 angegebenen Kennzeichen dadurch gelöst, daß jeweils ein Abschlußwiderstand bereits von vornherein angeordnet ist, der dann im Bedarfsfall auf einfache Weise abgeschaltet werden kann. Dies erfolgt zum Beispiel nach dem Öffnen des Kabeleingangs der Kabelmuffe durch Einschieben des neuen Kabels in den Steckanschluß der Vorrichtung, so daß auch bei nachträglichem Einsatz keine weiteren Manipulationen durchgeführt werden müssen. Von Vorteil gemäß der Erfindung ist weiterhin, daß für die sichere Endposition der jeweils eingeführten Kabel im Steckanschluß jeweils eine spür- oder sichtbare Rasterung vorgesehen ist, so daß ein sicherer elektrischer Anschluß gewährleistet werden kann. Weiterhin sind die erforderlichen Abdichtungen bei den Neubelegungen völlig unproblematisch, da in diesen Fällen die betroffenen Kabeleingänge zum ersten Mal geschrumpft werden. Durch geeignete Maßnahmen ist außerdem eine weitere Schrumpfung möglich, da aufgrund der zur Verfügung stehenden Länge der Kabeleingänge ein weiteres Absetzen möglich ist. Dies ist bei der bekannten Lösung jedoch nicht möglich, wenn bereits schon vorher für eine Kabelnachbildung der betroffene Kabeleingang abgedichtet werden mußte. Gemäß der Erfindung ist weiterhin von Vorteil, daß für jeden Abschlußwiderstand eine eigene Abschaltvorrichtung angeordnet ist, wobei bei der Einführung eines Kabels eine Rasteinrichtung ausgelöst wird.

Zweckmäßig ist bei alledem, daß durch die geschlossene Ausbildung der fingerförmig ausgebildeten Kabeleingänge bei Nichtbelegung keine Dichtungsprobleme auftreten. Zweckmäßigerweise wird die bereits auf der Vorrichtung zum Verbinden der Breitbandkabel aufgeschrumpfte Kabelmuffe nur für eine "Grundbelegung" mit Kabeln, das heißt also zum Beispiel für zwei Kabel, ausgebildet. Es besteht demnach eine Abzweigvorrichtung für insgesamt sechs Kabel aus vier geschlossenen und zwei bereits geöffneten Kabeleingängen, wobei vorteilhafterweise die geöffneten Kabeleingänge zwischen den geschlossenen angeordnet sind. Hiermit steht jedoch in engem Zusammenhang das zweite Problem, die elektrische Beschaltung der Abzweigungen mit Abschlußwiderständen, da bei den geschlossenen Kabeleingängen der Kabelmuffe die "elektrischen Eingänge" nicht mehr von außen zugänglich sind.

Die Erfindung wird nun anhand von drei Figuren näher erläutert:

Figur 1 zeigt eine erfindungsgemäße Vorrichtung im unbeschalteten Zustand in einer Draufsicht,

Figur 2 erläutert die Einführung eines Kabels, wobei eine Seitenansicht gewählt ist,

Figur 3 verdeutlicht die Einrasterung und Kontaktierung eines eingeführten Kabels.

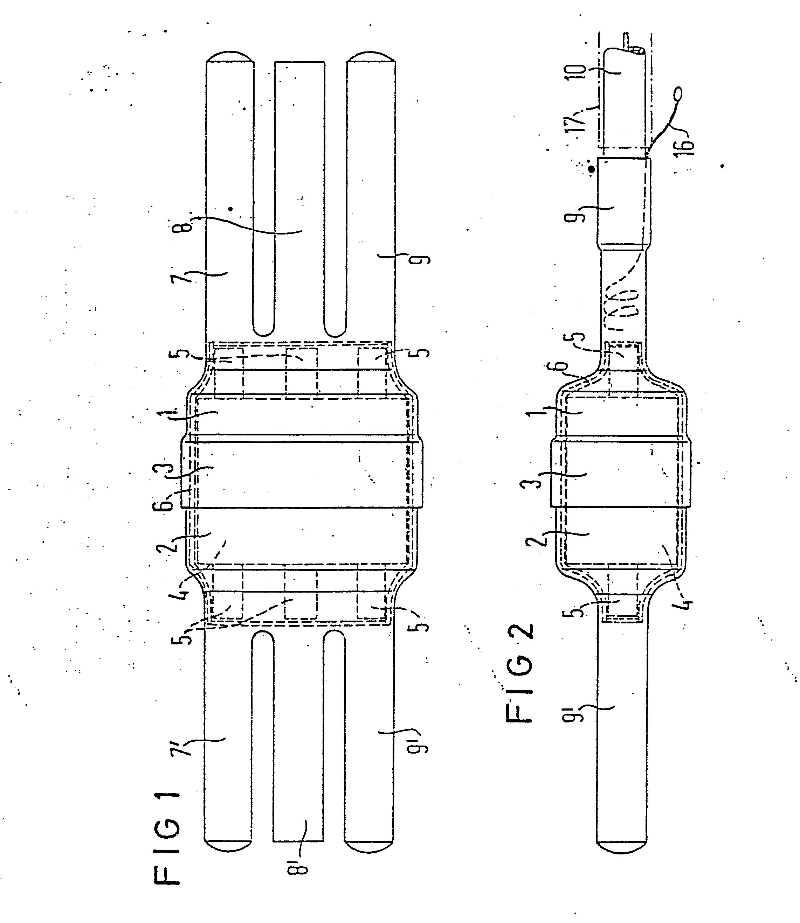

Die Figur 1 zeigt nun die fertigmontierte, jedoch noch nicht mit Kabeln belegte Vorrichtung mit Steckanschlüssen zum Verbinden koaxialer Breitbandkabel. Die rein elektrische Vorrichtung ist in einem völlig abgeschirmten Gehäuse 4 im Mittelteil der Kabelmuffe 1-2-3 untergebracht. Diese Kabelmuffe 1-2-3 besteht aus zwei fast gleichen Teilen 1 und 2, an denen die fingerförmigen Kabeleingänge angesetzt sind. Sie unterscheiden sich nur in ihren Mittelteilen 3, die so ausgebildet sind, daß sie ineinanderschiebbar sind. Die Kabelmuffe 1-2-3 ist in ihrem Mittelbereich bereits völlig auf dem Gehäuse 4 aufgeschrumpft, wobei im Inneren zwischen der Kabelmuffe 1-2-3 und dem Gehäuse 4 gegebenenfalls ein Thermoschutz 6 eingelagert ist, der verhindert, daß während des Schrumpfens im Inneren unzulässige Erwärmung auftritt. Am Gehäuse 4 sind weiterhin die Steckanschlüsse 5 für die anzuschließenden Kabel angebracht, die mit den fingerförmig ausgebildeten Kabeleingängen 7, 8, 9, 7', 8', 9' fluchten. Bei diesem Ausführungsbeispiel sind nun zwei mal drei Kabeleingänge vorhanden, von denen jeweils nur die in der Mitte liegenden offene Enden aufweisen. In diese offenen Kabeleingänge 8 bzw. 8' werden die zunächst benötigten Kabel eingeführt, während alle anderen Kabeleingänge infolge der kappenartigen Ausbildung an ihren Enden geschlossen bleiben. Bei Bedarf, das heißt also, wenn mehr als zwei Abzweige erforderlich sind, werden die Kappen der noch geschlossenen Kabeleingänge abgeschnitten. Sie sind damit sofort für die Aufnahme der Kabel bereit. Dies ist jedoch nur möglich, wenn im Inneren Vorsorge für den jeweils benötigten elektrischen Abschluß getroffen ist, wie es bei der Erfindung vorgesehen ist und wie später noch erläutert wird.

Die Figur 2 erläutert nun den Einsatz eines Kabels 10, welches in den Kabeleingang 9 der Kabelmuffe 1-2-3 eingeführt ist. Die Kabelmuffe 1-2-3 ist in einer Seitenansicht gezeigt und vermittelt somit im Zusammenhang mit Figur 1 die räumliche Anordnung der Kabeleingänge, die auf beiden Seiten der Kabelmuffe 1-2-3 angeordnet sind. Der Kabeleingang 9 ist bereits auf das eingeführte Kabel 10 aufgeschrumpft. Der hierbei entstehende Absatz ergibt sich durch die enge Aufschrumpfung auf das Kabel 10, bei dem in diesem Bereich der Kabelmantel abgesetzt ist, so daß der Kabeleingang 9 von hier ab auf dem Außenleiter des koaxialen Kabels 10 aufsitzt. Auf dem Kabel 10 ist hier noch ein Wärmeschutz 17 angedeutet, der während des Schrumpfvorganges auf das Kabel 10 aufgebracht ist und den Kabelmantel vor Beschädigung durch Wärmeeinwirkung schützt. Weiterhin wird hier ein reißfester Faden 16 angedeutet, der der Länge nach im Kabeleingang 9 vor dem Schrumpfen eingelegt oder bereits als fester Bestandteil der Kabelmuffe bei der Fertigung eingebracht wird. Diese reißfeste Faden 16 dient zum Einreißen des Kabeleingangs wenn ein Kabel aus der Kabelmuffe entfernt werden muß. Sollte nun darauf Wert gelegt werden, daß ein Kabeleingang eventuell mehrfach geöffnet werden muß, so kann das volle Aufschrumpfen über der gesamten Länge dadurch verhindert werden, daß nach Einführung des Kabels ein Stützrohr nachgeschoben wird, das mit seinem Außendurchmesser dem Innendurchmesser des geweiteten Kabeleinganges entspricht. Auf diese Weise wird der Kabeleingang nicht niedergeschrumpft und kann nach Abtrennung des ersten Schrumpfbereiches ein weiteres Mal verwendet werden, da nun der beim ersten Schrumpfvorgang gestützte Bereich nach Herausnahme des Stützrohres niedergeschrumpft werden kann. Dieser Vorgang kann je nach der Länge der Kabeleingänge und nach der Länge des erforderlichen Dichtungsbereiches mehrfach wiederholt werden. Die Innenflächen der Kabeleingänge sind für eine Verklebung oder Verschweißung mit dem BK-Kabelmantel vorbereitet, zum Beispiel durch Schmelzkleberbeschichtung oder weisen ein Einsatzrohr aus Kleber auf, wobei dieser Kleber während des Schrumpfvorganges aktiviert wird. Der zweite Kabeleingang 9' ist bei diesem gezeigten Montageschritt noch unbelegt, also noch nicht geöffnet und noch nicht geschrumpft.

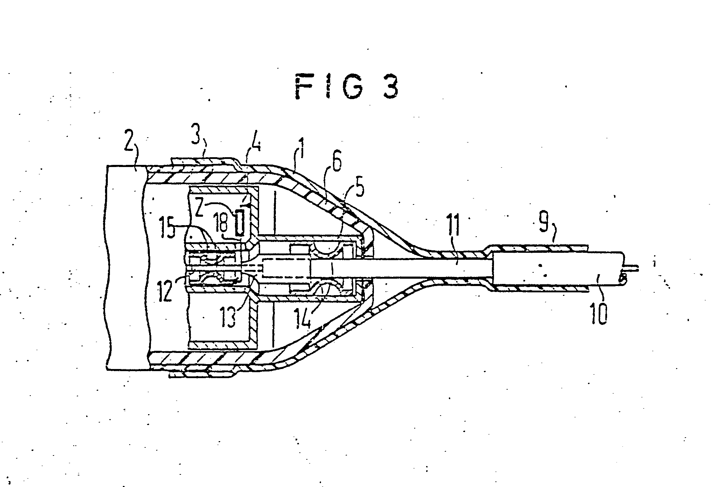

Die Figur 3 erläutert nun den erforderlichen elektrischen Abschluß mit Abschlußwiderständen an den Steckanschlüssen der elektrischen Vorrichtung innerhalb des Gehäuses 4. Diese Figur 3 läßt das eingeführte und entsprechend abgesetzte Kabel 10 erkennen, wobei der Kabeleingang 9 im ersten, äußeren Bereich direkt auf den Kabelmantel und im zweiten, inneren Bereich auf den Außenleiter 11 mit einer entsprechenden Zwischenlage aus Schmelzkleber dichtend aufgeschrumpft ist. Am Ende des Kabels ist die Ringisolation des Kabels abgesetzt, so daß der Innenleiter 12 übersteht und in eine an sich bekannte Kontaktierungsvorrichtung 15 eingeführt werden kann. Diese Kontaktierungsvorrichtung 15 besteht im wesentlichen aus Klemmen, die einen möglichst niedrigen Übergangswiderstand gewährleisten. Als Längswassersperre 13 wird am Ende des Kabels auf den Außenleiter 11 und den Innenleiter 12 zum Beispiel ein Schrumpfschlauch aufgeschrumpft. Statt eines Schrumpfschlauches kann auch ein elastisches Formteil aufgepreßt werden. Die Außenleiterkontaktierung 14 ist ebenfalls an sich bekannt und stellt den Kontakt zwischen dem Außenleiter 11 und dem Gehäuse 4 sicher. Gemäß der Erfindung wird nun eine sicht- bzw. spürbare Rasterung vorgesehen, die anzeigt, daß das Kabel völlig eingeschoben ist und somit die elektrische Kontaktierung sicherstellt. Diese Rasterung kann zum Beispiel dadurch gebildet werden, daß die Kontaktfedern der Außenleiterkontaktierung 14 nach dem Passieren der Längswassersperre 13 auf den kleineren Durchmesser des Außenleiters 11 niederklinken und somit ein Rückziehen des Kabels infolge des mechanischen Widerstandes durch die Längswassersperre 13 erschweren. Dieses Beispiel für eine Einrastvorrichtung steht jedoch nur stellvertretend für andere an sich bekannte Möglichkeiten für ein Einrasten in Form einer Rückzugsperre. Ein wichtiger Bestandteil der Erfindung ist jedoch auch das im Zusammenhang zu sehende Beschalten der elektrischen Abzweige der Vorrichtung mit angepaßten Widerständen an den Steckanschlüssen 5, die bei Beschaltung mit Kabeln entfernt werden müssen. Im Sinne der Erfindung ist dies nun im Zusammenhang mit vorher beschriebenen Maßnahmen nur dann sinnvoll, wenn auch die Abschaltung der Abschlußwiderstände ohne Eingriff in die Vorrichtung bzw. ohne Zusatzmontagen bzw. Demontagen erfolgen kann. So ist gemäß der Erfindung vorgesehen, daß an den Steckanschlüssen 5 eine Abschaltvorrichtung für jeden Abschlußwiderstand Z vorgesehen ist, wobei diese Abschaltvorrichtung durch das Einführen des entsprechenden Kabels in Tätigkeit gesetzt wird. Diese Abschaltvorrichtung besteht zum Beispiel aus eine Ruhekontakt, der durch das Einschieben des Kabels geöffnet wird, so daß die Zuleitung zum Abschlußwiderstand Z unterbrochen wird. Dies hat den Vorteil, daß bei eventuellem Widerlösen des Kabels der Abschlußwiderstand Z automatisch wieder angeschaltet wird. Eine einfachere Möglichkeit ergibt sich durch Anordnung einer zerstörbaren Vorrichtung, zum Beispiel aus einem Draht oder einer Folie, die durch Einschieben des Kabels unterbrochen wird. Hier ist allerdings keine Wiederanschaltung des Abschlußwiderstandes mehr möglich. Symbolhaft für eine solche Anordnung ist in der Figur 3 ein Abschlußwiderstand Z dargestellt, der über eine zerstörbare Abschaltvorrichtung 18, zum Beispiel über einen feinen Draht, trennbar angeschaltet ist. Dies wäre nun eine Abschaltung, die nach Ziehen des betreffenden Kabels eine erneute Anschaltung des Abschlußwiderstandes Z nicht zuläßt. Die Abschaltung kann jedoch auch reversibel ausgebildet sein, so daß der Abschlußwiderstand Z automatisch immer wieder angeschaltet wird. Eine solche Abschaltvorrichtung läßt sich durch entsprechend angeordnete Kontakte herstellen. Hierzu eignen sich beispielsweise Ruhekontakte, die beim Einschieben eines Kabels die Zuführung zum Abschlußwiderstand unterbrechen.

**Patentansprüche**

1. Vorrichtung mit Steckanschlüssen zum Verbinden von koaxialen Breitbandkabeln mit einer im Bereich der Vorrichtung aufgeschrumpften Kabelmuffe, wobei die Kabelmuffe den Steckanschlüssen der Vorrichtung entsprechende, aufschrumpfbare Kabeleingänge aufweist, die fingerförmig von der Kabelmuffe (1-2-3) abstehend gestaltet sind und wobei mindestens ein Teil der Kabeleingänge (7, 8, 9, 7', 8', 9') an ihren abstehenden Enden als geschlossene, abtrennbare Abschlußkappen ausgebildet sind,
dadurch gekennzeichnet , daß an den Steckanschlüssen (5) der Kabeleingänge (7, 8, 9, 7', 8', 9') jeweils ein elektrisch angepaßter, abschaltbarer Abschlußwiderstand (Z) angeordnet ist, daß eine Abschaltvorrichtung (18) für jeden Abschlußwiderstand (Z) angeordnet ist und
daß eine durch die Einführung eines Kabels wirksam werdende Rasteinrichtung für das jeweils eingeführte Kabel angeordnet ist.

2. Vorrichtung nach Anspruch 1,
dadurch gekennzeichnet , daß die Kabelmuffe (1-2-3) einen innen liegenden Thermoschutz (6) aufweist.

3. Vorrichtung nach einem der vorhergehenden Ansprüche,
dadurch gekennzeichnet , daß die Kabeleingänge mehrfach schrumpfbar sind.

4. Vorrichtung nach Anspruch 3,
dadurch gekennzeichnet , daß die Kabeleingänge innenliegende, rohrförmige Teilabstützungen aufweisen.

5. Vorrichtung nach einem der vorhergehenden Ansprüche,
dadurch gekennzeichnet , daß die Kabeleingänge auf den Innenflächen jeweils eine Schmelzkleberbeschichtung aufweisen.

6. Vorrichtung nach einem der vorhergehenden Ansprüche,
dadurch gekennzeichnet , daß die Kabeleingänge ein Innenrohr aus einem Schmelzkleber aufweisen.

7. Vorrichtung nach einem der vorhergehenden Ansprüche,
dadurch gekennzeichnet , daß die eingeführten Kabel eine Wassersperre zwischen Innenleiter und Außenleiter aufweisen.

8. Vorrichtung nach Anspruch 7,
dadurch gekennzeichnet , daß die Wassersperre aus einem schrumpfbaren Rohr besteht.

9. Vorrichtung nach Anspruch 7,
dadurch gekennzeichnet , daß die Wassersperre aus einem Elastomerrohr besteht.

10. Vorrichtung nach einem der vorhergehenden Ansprüche,
dadurch gekennzeichnet , daß die Abschaltvorrichtung (18) für den Abschlußwiderstand (Z) eines Steckanschlusses (5) durch die Einführung des entsprechenden Kabels auslösbar ist.

11. Vorrichtung nach einem der vorhergehenden Ansprüche,
dadurch gekennzeichnet , daß die Abschaltvorrichtung (18) für den Abschlußwiderstand (Z) reversibel ausgebildet ist.

12. Vorrichtung nach Anspruch 11,

dadurch gekennzeichnet , daß die Abschaltvorrichtung (18) aus Federkontakten gebildet ist.

13. Vorrichtung nach einem der Ansprüche 1 bis 10, dadurch gekennzeichnet , daß die Abschaltvorrichtung (18) durch eine vom einzuführenden Kabel zerstörbare elektrische Verbindung gebildet ist.

14. Vorrichtung nach einem der vorhergehenden Ansprüche, dadurch gekennzeichnet , daß die Rasteinrichtung durch eine Verdickung am eingeführten Kabel auslösbar ist.

15. Vorrichtung nach einem der Ansprüche 1 bis 13, dadurch gekennzeichnet , daß die Rasteinrichtung durch die auf dem Außenleiter des Kabels aufgebrachte Wassersperre auslösbar ist.

16. Vorrichtung nach einem der vorhergehenden Ansprüche, dadurch gekennzeichnet , daß ein reißfester Faden im Inneren der Kabeleingänge (7, 8, 9, 7', 8', 9') eingelagert ist.

17. Vorrichtung nach einem der vorhergehenden Ansprüche, dadurch gekennzeichnet , daß auf jeder Seite der Kabelmuffe (1-2-3) ein Kabeleingang (8, 8') am Ende offen ist und daß alle übrigen Kabeleingänge (7, 9, 7', 9') abgeschlossen sind.

18. Vorrichtung nach einem der vorhergehenden Ansprüche, dadurch gekennzeichnet , daß drei Kabeleingänge pro Seite der Kabelmuffe angeordnet sind.

19. Vorrichtung nach einem der vorhergehenden Ansprüche, dadurch gekennzeichnet , daß der Abschlußwiderstand jeweils 75Ω beträgt.

20. Vorrichtung nach Anspruch 2, dadurch gekennzeichnet , daß der Thermoschutz (6) aus Schichten von Aluminium und Styropor besteht.

## Claims

1. A device comprising plug connections for the connection of coaxial wide band cables to a cable sleeve which is shrunk on in the region of the connection, where the cable sleeve has cable input sleeves which correspond to the plug connections of the device and are capable of being shrink-fitted and which protrude outwardly from the cable sleeve in a finger-like fashion and where at least one of the cable inputs (7, 8, 9, 7', 8', 9') is provided with a sealed, detachable terminal cap at its distal end, characterised in that an electrically adapted, disconnectable terminal resistor (Z) is respectively arranged at the plug connections (5) of the cable inputs (7, 8, 9, 7', 8', 9'), that a disconnection device (18) is arranged for each terminal resistor (Z), and that there is arranged a locking device for the respectively inserted cable, which locking device is rendered effective by the introduction of a cable.

2. A device as claimed in Claim 1, characterised in that the cable sleeve (1-2-3) has an internal thermal insulator (6).

3. A device as claimed in one of the preceding Claims, characterised in that the cable inputs can be repeatedly shrink-fitted.

4. A device as claimed in Claim 3, characterised in that the cable input sleeves have internally arranged, tubular supports extending over a part of their length.

5. A device as claimed in one of the preceding Claims, characterised in that the cable input sleeves respectively have a fusion adhesive coating on their inner surfaces.

6. A device as claimed in one of the preceding Claims, characterised in that the cable input sleeves have an inner tube consisting of a fusion adhesive.

7. A device as claimed in one of the preceding Claims, characterised in that the inserted cables have a moisture barrier between the inner conductor and the outer conductor.

8. A device as claimed in Claim 7, characterised in that the moisture barrier consists of a shrink-fitting tube.

9. A device as claimed in Claim 7, characterised in that the moisture barrier consists of an elastomeric tube.

10. A device as claimed in one of the preceding Claims, characterised in that the disconnection device (18) for the terminal resistor (Z) of a plug connection (5) can be triggered by the insertion of the corresponding cable.

11. A device as claimed in one of the preceding Claims, characterised in that the disconnection device (18) for the terminal resistor (Z) is reconnectable.

12. A device as claimed in Claim 11, characterised in that the disconnection device (18) consists of spring contacts.

13. A device as claimed in one of Claims 1 to 10, characterised in that the disconnection device (18) is formed by an electrical connection which is destroyed by the cable when inserted.

14. A device as claimed in one of the preceding Claims, characterised in that the locking device is triggered by a thickened section on the inserted cable.

15. A device as claimed in one of Claims 7 to 13, characterised in that the locking device can be triggered by the moisture barrier which is fitted on the outer conductor of the cable.

16. A device as claimed in one of the preceding Claims, characterised in that a thread resistant to tearing is positioned inside one of the cable input sleeves (7, 8, 9, 7', 8', 9').

17. A device as claimed in one of the preceding Claims, characterised in that one cable input sleeve (8, 8') is open at the end on each side of the cable sleeve (1-2-3) and that all remaining cable input sleeves (7, 9, 7', 9') are sealed.

18. A device as claimed in one of the preceding Claims, <u>characterised in that</u> three cable inputs are arranged on each side of the cable sleeve.

19. A device as claimed in one of the preceding Claims, <u>characterised in that</u> the resistance of the terminal resistor is 75Ω.

20. A device as claimed in Claim 2, <u>characterised in that</u> the thermal insulation (6) consists of layers of aluminium and expanded polystyrene foam.

**Revendications**

1. Dispositif comportant des bornes à enfichage pour relier des câbles coaxiaux à large bande à un manchon à câbles thermo-retractable au voisinage du dispositif, le manchon à câbles comportant des entrées pour câbles, thermo-retractables et correspondant aux bornes à enfichage du dispositif, qui sont agencées de manière a faire saillie en forme de doigts, à partir du manchon à câbles (1-2-3), tandis qu'au moins une partie des entrées pour câbles (7, 8, 9, 7′, 8′, 9′) sont réalisées, au niveau de leurs extrémités saillantes, sous la forme de capuchons de fermeture fermés détachables, caractérisé par le fait qu'une résistance de terminaison (Z), qui est adaptée électriquement et qui peut être débranchée, est montée respectivement sur les bornes à enfichage (5) des entrées pour câbles (7, 8, 9, 7′, 8′, 9′), qu'un dispositif de débranchement (18) est prévu pour chaque résistance de terminaison (Z) et qu'un dispositif d'encliquetage, qui devient actif par suite de l'insertion d'un câble, est prévu pour le câble respectivement inséré.

2. Dispositif suivant la revendication 1, caractérisé par le fait que le manchon à câbles (1-2-3) possède un dispositif intérieur (6) de protection contre la chaleur.

3. Dispositif selon l'une des revendications précédentes, caractérisé par le fait que les entrées pour câbles peuvent être plusieurs fois contractées.

4. Dispositif suivant l'une des revendications précédentes, caractérisé par le fait que les entrées pour câbles comportent des supports partiels intérieurs de forme tubulaire.

5. Dispositif suivant l'une des revendications précédentes, caractérisé par le fait que les entrées pour câbles comportent chacune, sur les surfaces intérieures, un revêtement formé d'une colle fusible.

6. Dispositif suivant l'une des revendications précédentes, caractérisé par le fait que les entrées pour câbles comportent un tube intérieur constitué par une colle fusible.

7. Dispositif suivant l'une des revendications précédentes, caractérisé par le fait que les câbles insérés comportent une barrière empêchant la pénétration de l'eau entre le conducteur intérieur et le conducteur extérieur.

8. Dispositif suivant la revendication 7, caractérisé par le fait que la barrière empêchant la pénétration de l'eau est constituée par un tube pouvant être contracté.

9. Dispositif suivant la revendication 7, caractérisé par le fait que la barrière empêchant la pénétration de l'eau est constituée par un tube en elastomère.

10. Dispositif suivant l'une des revendications précédentes, caractérisé par le fait que le dispositif de débranchement (18) pour la résistance de terminaison (Z) d'une borne à enfichage (5) peut être désenclenché sous l'effet de l'insertion du câble correspondant.

11. Dispositif suivant l'une des revendications précédentes, caractérisé par le fait que le dispositif de débranchement (18) pour la résistance de terminaison (Z) est agencé de manière à être réversible.

12. Dispositif suivant la revendication 11, caractérisé par le fait que le dispositif de débranchement (18) est constitué par des contacts élastiques.

13. Dispositif suivant l'une des revendications 1 à 10, caractérisé par le fait que le dispositif de débranchement (18) est formé par une liaison électrique pouvant être détruite par un câble devant être introduit.

14. Dispositif suivant l'une des revendications précédentes, caractérisé par le fait que le dispositif d'encliquetage peut être désenclenché par un épaississement situé sur le câble introduit.

15. Dispositif suivant l'une des revendications 1 à 13, caractérisé par le fait que le dispositif d'encliquetage peut être désenclenché par la barrière d'entrée contre la pénétration de l'eau, montée sur le conducteur extérieur du câble.

16. Dispositif suivant l'une des revendications précédentes, caractérisé par le fait que le fil résistant à la rupture est inséré à l'intérieur des entrées pour câbles (7, 8, 9, 7′, 8′, 9′).

17. Dispositif suivant l'une des revendications précédentes, caractérisé par le fait qu'une entrée pour câbles (8, 8′) est ouverte au niveau de l'extrémité, de chaque côté du manchon à câbles (1-2-3) et que toutes les autres entrées pour câbles (7, 9, 7′, 9′) sont fermées.

18. Dispositif suivant l'une des revendications précédentes, caractérisé par le fait que trois entrées pour câbles, sont prévues pour chaque côté du manchon à câbles.

19. Dispositif suivant l'une des revendications précédentes, caractérisé par le fait que la résistance de terminaison est égale à respectivement 75 Ω.

20. Dispositif suivant la revendication 2, caractérisé par le fait que le dispositif (6) de protection contre la chaleur est constitué par des couches d'aluminium et de styropor.

FIG 1

FIG 2

# FIG 3